# EUROPEAN PATENT APPLICATION

(11) **EP 4 175 359 A1**
(43) Date of publication of application: **03.05.2023**
(21) Application number: 21832432.5
(22) Date of filing: 10.06.2021
(51) Int. Cl.: H04W 36/00

(54) **RESOURCE MANAGEMENT METHOD AND NETWORK DEVICE**

(30) Priority: 28.06.2020 CN 202010599542
(71) Applicant: ZTE Corporation, Shenzhen, Guangdong 518057 (CN)
(72) Inventor: SUN, Shanshan, Shenzhen, Guangdong 518057 (CN)
(74) Representative: Osterhoff, Utz
(86) International application number: PCT/CN2021/099433
(87) International publication number: WO 2022/001616

(57) **Abstract**

The present application relates to communication filed, and discloses a resource management method and a network device. The method includes: receiving a handover request, wherein the handover request carries first data resource bearer (DRB) information used by a user equipment on a source side during a handover process of cross-base stations; performing resource admission according to the first data resource bearer information, obtaining second data resource bearer information admitted successfully and third data resource bearer information non-admitted; sending the second data resource bearer information and the third data resource bearer information to a distributed unit; receiving radio access resource bearer configuration information returned by the distributed unit according to the second data resource bearer information and the third data resource bearer information; and sending the radio access resource bearer configuration information to the user equipment.

## Description

### CROSS-REFERENCE TO RELATED APPLICATIONS

This application claims priority to Chinese Patent Application No. 202010599542.0, titled "RESOURCE MANAGEMENT METHOD AND NETWORK DEVICE", filed on June 28, 2020, the entire contents of which are incorporated herein by reference.

### TECHNICAL FIELD

Embodiments of the present application relate to the field of communications, and in particular to a resource management method and a network device.

### BACKGROUND

In the 5G new radio (NR) network, the 5G base station (gNB) consists of a centralized unit (CU) and a distributed unit (DU). The process of communication between the user equipment (UE) and the gNB can include: the CU allocates the available data resource bearer (DRB) to the UE and sends the allocation result of the DRB to the DU; the DU allocates the corresponding radio access resources, such as radio link control (RLC) resources, to the DRB and returns the allocation result of the radio access resource to the CU; the CU sends the allocation result of the radio access resource to the UE; the UE uses the radio access resource to communicate with the CU through the DU.

During the handover process of cross-base stations, the UE needs to send the DRB on the source side to the target CU, and the target CU performs resource admission on PDU session, so that the UE can continue to use the radio access resources on the source side to communicate with the target CU through the target DU.

However, in the process of implementing the embodiment of the present application, the inventor found that: the CU may have some DRB not be admitted during the resource admission of PDU session, and if the UE uses the radio access resource corresponding to the non-admitted DRB for communication, the UE service will be interrupted.

### SUMMARY

The purpose of embodiments of the present application is to provide a resource management method and a network device, which can reduce the service interruption rate of the terminal device during the handover process of cross-base stations.

In order to solve the above technical problem, embodiments of the present application provide a resource management method, including: receiving a handover request, wherein the handover request carries first data resource bearer (DRB) information used by a user equipment on a source side during a handover process of cross-base stations; performing resource admission according to the first data resource bearer information, obtaining second data resource bearer information admitted successfully and third data resource bearer information non-admitted; sending the second data resource bearer information and the third data resource bearer information to a distributed unit; receiving radio access resource bearer configuration information returned by the distributed unit according to the second data resource bearer information and the third data resource bearer information; and sending the radio access resource bearer configuration information to the user equipment.

Embodiments of the present application further provide a resource management method, including: receiving second data resource bearer information and third data resource bearer information sent by a centralized unit, the second data resource bearer information is admitted successfully when performing resource admission according to the first data resource bearer information used by a user equipment on a source side during a handover process of cross-base stations, and the third data resource bearer information is not admitted when performing the resource admission according to the first data resource bearer information used by the user equipment on the source side during the handover process of cross-base stations; releasing radio access resource bearer corresponding to the third data resource bearer information; and sending radio access resource bearer configuration information to the centralized unit, wherein the radio access resource bearer configuration information is used to indicate a release of the radio access resource bearer corresponding to the third data resource bearer information.

Embodiments of the present application further provide a network device, including:
at least one processor; and
a memory communicated with the at least one processor;
the memory stores instructions executable by the at least one processor, the instructions are executed by the at least one processor to enable the at least one processor to perform the resource management method described above.

Embodiments of the present application further provide a computer readable storage medium storing programs, the programs are executable by a processor to implement the resource management method described above.

### BRIEF DESCRIPTION OF THE DRAWINGS

One or more embodiments are illustrated exemplarily by the accompanying drawings, and these exemplary illustrations do not constitute a limitation on the embodiments.
FIG. 1 is a flowchart of a resource management method according to a first embodiment of the present application.
FIG. 2 is a first flowchart of an operation 103 in the resource management method shown in FIG. 1 according to the first embodiment of the present application.
FIG. 3 is a second flowchart of the operation 103 in the resource management method shown in FIG. 1 according to the first embodiment of the present application.
FIG. 4 is a flowchart of the resource management method according to a second embodiment of the present application.
FIG. 5 is a first flowchart of an operation 401 in the resource management method shown in FIG. 4 according to the second embodiment of the present application.
FIG. 6 is a second flowchart of the operation 401 in the resource management method shown in FIG. 4 according to the second embodiment of the present application.
FIG. 7 is a flowchart of the resource management method according to a third embodiment of the present application.
FIG. 8 is a timing diagram of the resource management method according to a fourth embodiment of the present application.
FIG. 9 is a timing diagram of the resource management method according to a fifth embodiment of the present application.
FIG. 10 is a timing diagram of the resource management method according to a sixth embodiment of the present application.
FIG. 11 is a schematic structural diagram of a network device according to the sixth embodiment of the present application.

### DETAILED DESCRIPTION OF THE EMBODIMENTS

In order to make the purpose, technical solutions and advantages of the embodiments of the present application clearer, each of the embodiments of the present application will be described in detail below in conjunction with the accompanying drawings. However, it will be understood by those skilled in the art that in each embodiment of the present application, many technical details are presented to enable the reader to better understand the present application. However, even without these technical details and various variations and modifications based on each of the following embodiments, the technical solutions protected by the present application can be realized. The following individual embodiments are divided for descriptive convenience and shall not constitute any limitation to the specific manner of embodiment of the present application, and the individual embodiments may be combined and referenced to each other without contradiction.

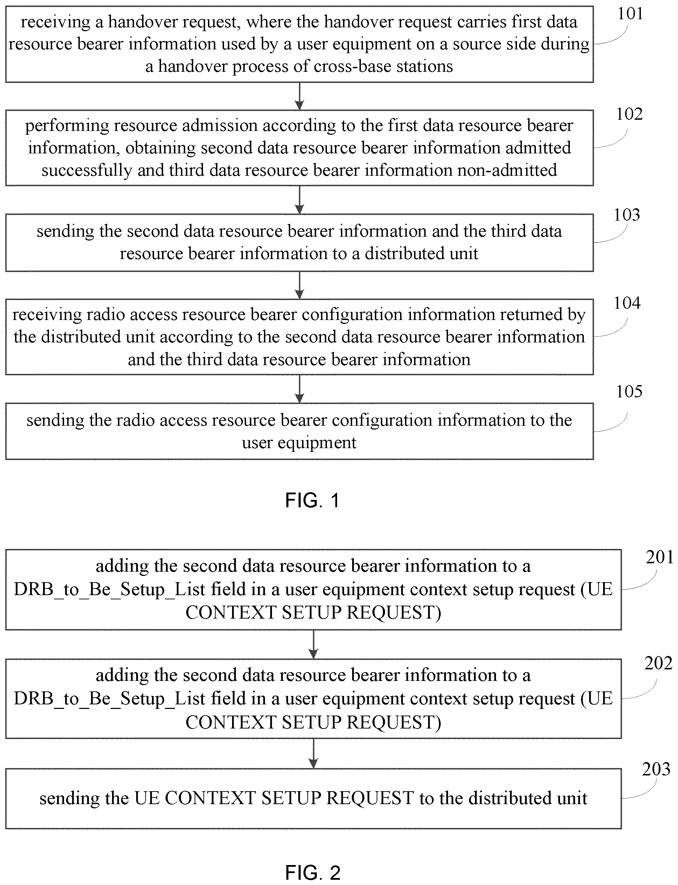

A first embodiment of the present application relates to a resource management method, the flowchart of which is shown in FIG. 1, including:
operation 101, receiving a handover request, where the handover request carries first data resource bearer information used by a user equipment on a source side during a handover process of cross-base stations.
operation 102, performing resource admission according to the first data resource bearer information, obtaining second data resource bearer information admitted successfully and third data resource bearer information non-admitted.

In the embodiment, operation 102 may include the following three cases.

Case one: obtaining data resource bearer information admitted successfully from the first data resource bearer information as the second data resource bearer information, taking data resource bearer information other than the second data resource bearer information from the first data resource bearer information as the third data resource bearer information.

Case two: allocating a new data resource bearer for the user equipment, taking new data resource bearer information as the second data resource bearer information and the first resource bearer information as the third data resource bearer information.

Case three: obtaining data resource bearer information admitted successfully from the first data resource bearer information as first sub-data resource bearer information, allocating a new data resource bearer for the user equipment, taking new data resource bearer information as second sub-data resource bearer information, taking the first sub-data resource bearer information and the second sub-data resource bearer information as the second data resource bearer information, and taking data resource bearer information other than the first sub-data resource bearer information from the first data resource bearer information as the third data resource bearer information.

Of course, the above three cases are only specific examples, here not to repeat each case.

Operation 103, sending the second data resource bearer information and the third data resource bearer information to a distributed unit.

In the embodiment, operation 103 can send the second data resource bearer information and the third data resource bearer information to the distributed unit by various methods.

For example, as shown in FIG. 2, operation 103 may include:
operation 201, adding the second data resource bearer information to a DRB_to_Be_Setup_List field in a user equipment context setup request (UE CONTEXT SETUP REQUEST).
operation 202, adding the first data resource bearer information to a Handover Preparation Information field in the UE CONTEXT SETUP REQUEST.
operation 203, sending the UE CONTEXT SETUP REQUEST to the distributed unit.

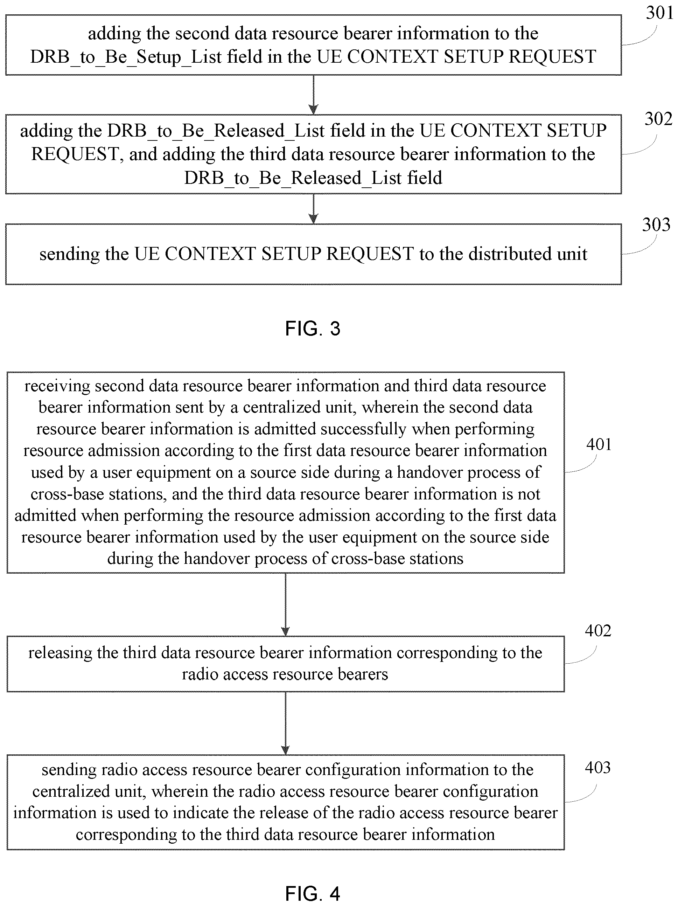

As shown in FIG. 3, operation 103 may include:
operation 301, adding the second data resource bearer information to the DRB_to_Be_Setup_List field in the UE CONTEXT SETUP REQUEST.
operation 302, adding the DRB_to_Be_Released_List field in the UE CONTEXT SETUP REQUEST, and adding the third data resource bearer information to the DRB_to_Be_Released_List field.
operation 303, sending UE CONTEXT SETUP REQUEST to the distributed unit.

Of course, the above two methods are only specific examples, in the actual use, other methods can send the second data resource bearer information and the third data resource bearer information to the distributed unit, here not to repeat one by one.
operation 104, receiving radio access resource bearer configuration information returned by the distributed unit according to the second data resource bearer information and the third data resource bearer information.
operation 105, sending the radio access resource bearer configuration information to the user equipment.

In the embodiment, operation 105 can send switch command reconfiguration (RRCReconfiguration) instructions to the user equipment for adding the radio access resource bearer configuration information to the RadioBearerConfig field.

In the embodiment of the present application, the second data resource bearer information admitted successfully and the third data resource bearer information non-admitted are sent to the distributed unit, so that the distributed unit can allocate and manage the corresponding radio access resource bearer according to the second data resource bearer information and the third data resource bearer information, and can send the radio access resource bearer information to the user equipment after receiving the radio access resource bearer configuration information, so that the radio access resource bearer of the user equipment is consistent with the network side, to reduce the service interruption rate of the user equipment during a handover process of cross-base stations.

The second embodiment of the present application relates to a resource management method, the flowchart of which is shown in FIG. 4, including:
operation 401, receiving second data resource bearer information and third data resource bearer information sent by a centralized unit, wherein the second data resource bearer information is admitted successfully when performing resource admission according to the first data resource bearer information used by a user equipment on a source side during a handover process of cross-base stations, and the third data resource bearer information is not admitted when performing the resource admission according to the first data resource bearer information used by the user equipment on the source side during the handover process of cross-base stations.

In the embodiment, operation 401 can receive the second data resource bearer information and the third data resource bearer information sent by the centralized unit by various methods.

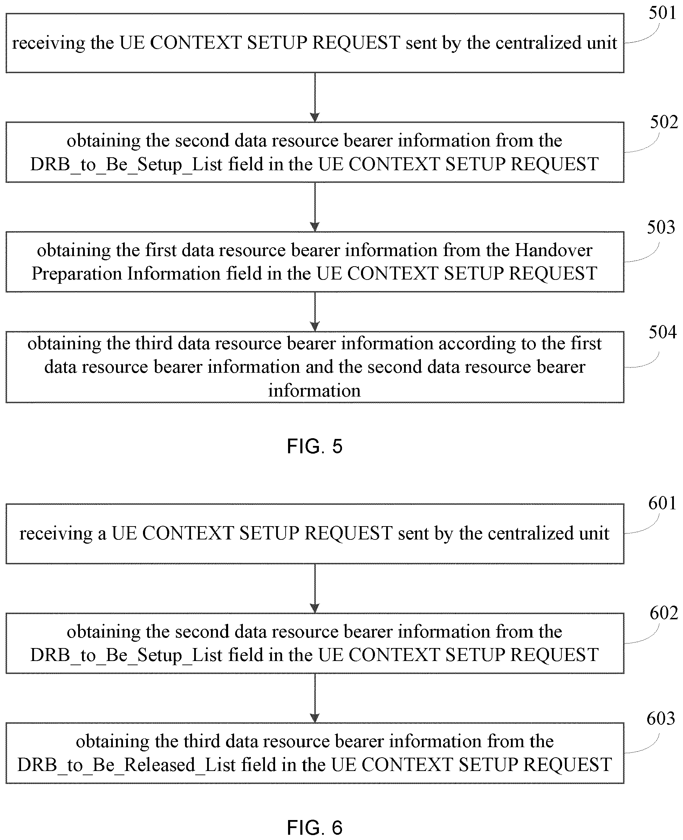

For example, as shown in FIG. 5, operation 401 may include:
operation 501, receiving the UE CONTEXT SETUP REQUEST sent by the centralized unit.
operation 502, obtaining the second data resource bearer information from the DRB_to_Be_Setup_List field in the UE CONTEXT SETUP REQUEST.
operation 503, obtaining the first data resource bearer information from the Handover Preparation Information field in the UE CONTEXT SETUP REQUEST.
operation 504, obtaining the third data resource bearer information according to the first data resource bearer information and the second data resource bearer information.

Another example: as shown in FIG. 6, operation 401 may include:
operation 601, receiving a UE CONTEXT SETUP REQUEST sent by the centralized unit.
operation 602, obtaining the second data resource bearer information from the DRB_to_Be_Setup_List field in the UE CONTEXT SETUP REQUEST.
operation 603, obtaining the third data resource bearer information from the DRB_to_Be_Released_List field in the UE CONTEXT SETUP REQUEST.

Of course, the above two methods are only specific examples, in the actual use, other methods can receive the second data resource bearer information and third data resource bearer information sent by the centralized unit, here not to repeat.
operation 402, releasing the third data resource bearer information corresponding to the radio access resource bearers.

In the embodiment, the radio access resource bearers can be RLC.
operation 403, sending radio access resource bearer configuration information to the centralized unit, wherein the radio access resource bearer configuration information is used to indicate the release of the radio access resource bearer corresponding to the third data resource bearer information.

In the embodiment, operation 403 can add the radio access resource bearer information corresponding to the third data resource bearer information to the CellGroupConfig field in the user equipment context setup response (UE CONTEXT SETUP RESPONSE), and send UE CONTEXT SETUP RESPONSE to the centralized unit.

In the embodiment of the present application, the centralized unit the second data resource bearer information admitted successfully and the third data resource bearer information non-admitted are received from the centralized unit, the radio access resource bearer corresponding to the third data resource bearer information is released, and the centralized unit is informed of the release result (radio access resource bearer configuration information), so that the centralized unit can send the radio access resource bearer information to the user equipment, so that the radio access resource bearer of the user equipment is consistent with the network side, to reduce the service interruption rate of the user equipment during a handover process of cross-base stations.

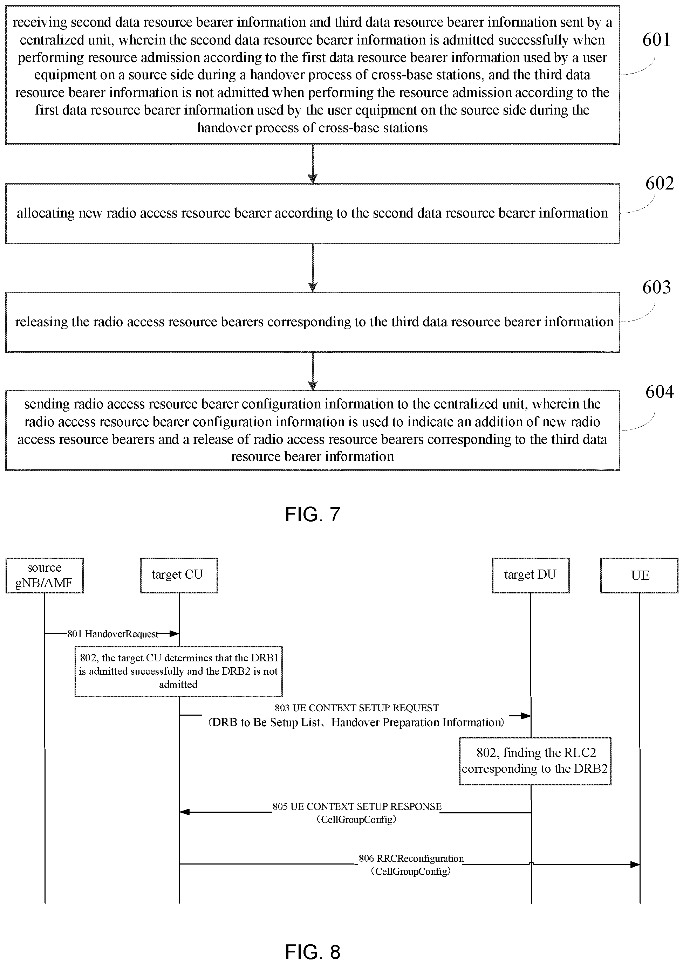

The third embodiment of the present application relates to a resource management method, the flowchart of which is shown in FIG. 7, including:
operation 701, receiving second data resource bearer information and third data resource bearer information sent by a centralized unit, wherein the second data resource bearer information is admitted successfully when performing resource admission according to the first data resource bearer information used by a user equipment on a source side during a handover process of cross-base stations, and the third data resource bearer information is not admitted when performing the resource admission according to the first data resource bearer information used by the user equipment on the source side during the handover process of cross-base stations.

In the embodiment, the specific embodiment method of operation 701 can be referred to operation 401, and will not be repeated here.
operation 702, allocating new radio access resource bearer according to the second data resource bearer information.
operation 703, releasing the radio access resource bearers corresponding to the third data resource bearer information.
operation 704, sending radio access resource bearer configuration information to the centralized unit, wherein the radio access resource bearer configuration information is used to indicate an addition of new radio access resource bearers and a release of radio access resource bearers corresponding to the third data resource bearer information.

In the embodiment, operation 704 can add both the new radio access resource bearer information and the radio access resource bearer information corresponding to the third data resource bearer information to the CellGroupConfig field in the user equipment context setup response (UE CONTEXT SETUP RESPONSE) and send UE CONTEXT SETUP RESPONSE to the centralized unit.

Based on achieving the technical effect provided by the second embodiment, the embodiment of the present application can further allocate a new radio access resource bearer for the second data resource bearer information and send the new radio access resource bearer information to the centralized unit, so that the centralized unit can send the new radio access resource bearer information to the user equipment, to make the radio access resource bearer of the user equipment to be consistent with the network side, and to reduce the service interruption rate of user equipment during a handover process of cross-base stations.

The above technical solutions provided in the first embodiment to the third embodiment are applied in the case where the UE is switched from the source side to the target side across base stations, and the target gNB consists of the target CU and the target DU, where the technical solution provided in the first embodiment is specifically applied to the target CU, and the technical solutions provided in the second and third embodiments are specifically applied to the target DU. In order to enable those skilled in the art to understand the technical solutions provided by the above embodiments more clearly, different application scenarios are for specific description as below.

Scenario one: the first data resource bearers used by the UE on the source side include: DRB1 and DRB2, and the CU on the target side only admits DRB1 successfully and fails to admit DRB2 when performing resource admission, i.e.: the second data resource bearer is DRB1 and the third data resource bearer is DRB2.

As shown in FIG. 8, the resource management method according to the fourth embodiment of the present application, includes:
operation 801, the source gNB or authentication management function (AMF) sends a HandoverRequest to the target CU, the DRB1 and DRB2 are carried in the Handover Preparation Information in the HandoverRequest.
operation 802, the target CU determines that the DRB1 is admitted successfully and the DRB2 is not admitted.
operation 803, the target CU sends a UE CONTEXT SETUP REQUEST to the target DU for adding DRB1 to the DRB_to_Be_Setup_List field and adding the Handover Preparation Information in the HandoverRequest to the Handover Preparation Information in the CU to DU RRC Information.
operation 804, the target DU obtains the DRB1 admitted successfully from the DRB_to_Be_Setup_List in the UE CONTEXT SETUP REQUEST, obtains the DRB1 and DRB2 of the source side from the Handover Preparation Information, determines the DRB2 non-admitted, and finds the RLC2 corresponding to the DRB2.
operation 805, the target DU sends UE CONTEXT SETUP RESPONSE to the target CU for adding RLC2 to CellGroupConfig.
operation 806, the target CU sends RRCReconfiguration to the UE, the RRCReconfiguration carries CellGroupConfig.

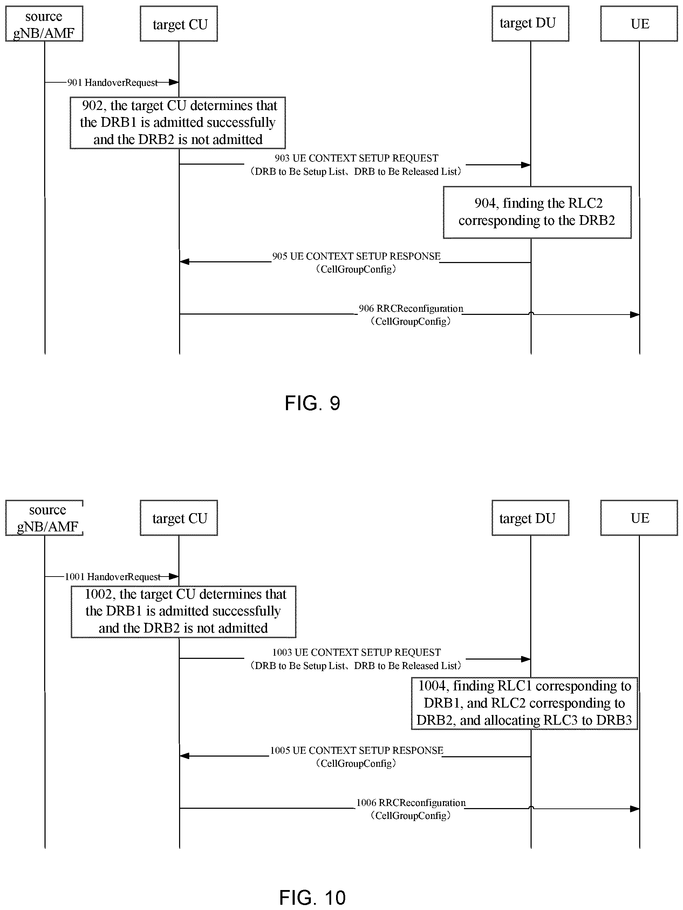

As shown in FIG. 9, the resource management method provided by the fifth embodiment of the present application includes:
operation 901, the source gNB or AMF sends a HandoverRequest to the target CU, DRB1 and DRB2 are carried in the Handover Preparation Information in the HandoverRequest.
operation 902, the target CU determines that the DRB1 is admitted succcefully and the DRB2 is not admitted.
operation 903, the target CU sends UE CONTEXT SETUP REQUEST to the target DU for adding DRB1 to the DRB_to_Be_Setup_List field and DRB2 to the DRB_to_Be_Released_List field.
operation 904, the target DU obtains DRB1 admitted succcefully from the DRB_to_Be_Setup_List in the UE CONTEXT SETUP REQUEST, obtains DRB2 non-admitted from the DRB_to_Be_Released_List field, and finds RLC2 corresponding to DRB2.
operation 905, the target DU sends UE CONTEXT SETUP RESPONSE to the target CU for adding RLC2 to the CellGroupConfig.
operation 906, the target CU sends RRCReconfiguration to the UE, where the RRCReconfiguration carries CellGroupConfig in the RRCReconfiguration.

Scenario two: the first data resource bearers used by the UE on the source side include: DRB1 and DRB2, the target side CU only admits the new DRB3 successfully and fails to admit DRB1 and DRB2 when performing resource admission, i.e.: the second data resource bearers are DRB3, and the third data resource bearers are DRB1 and DRB2.

As shown in FIG. 10, the resource management method according to the sixth embodiment of the present application includes:
operation 1001, the source gNB or AMF sends a HandoverRequest to the target CU, DRB1 and DRB2 are carried in the Handover Preparation Information of the HandoverRequest.
operation 1002, the target CU determines that the new DRB3 is admitted successfully, and the DRB1 and DRB2 are not admitted.
operation 1003, the target CU sends a UE CONTEXT SETUP REQUEST to the target DU for adding DRB3 to the DRB_to_Be_Setup_List field and DRB1 and DRB2 to the DRB_to_Be_Released_List field.
operation 1004, the target DU obtains DRB3 admitted successfully from DRB_to_Be_Setup_List in the UE CONTEXT SETUP REQUEST, obtains DRB1 and DRB2 non-admitted from the DRB_to_Be_Released_List field, and finds RLC1 corresponding to DRB1, and RLC2 corresponding to DRB2, and allocates RLC3 to DRB3.
operation 1005, the target DU sends UE CONTEXT SETUP RESPONSE to the target CU to add RLC1, RLC2 and RLC3 to CellGroupConfig.
operation 1006, the target CU sends RRCReconfiguration to the UE, where the RRCReconfiguration carries CellGroupConfig.

In the embodiment of the present application, the target CU sends the second data resource bearer information admitted successfully and the third data resource bearer information non-admitted to the target DU, so that the target DU can allocate and manage the corresponding RLC according to the second data resource bearer information and the third data resource bearer information, and the target CU can allocate and manage the corresponding RLC after receiving the radio access resource bearer configuration information sent by the target DU. The target CU can send the radio access resource bearer information to the UE after receiving the radio access resource bearer configuration information sent by the target DU, so that the radio access resource bearer of the UE is consistent with the target CU and the target DU, to reduce the service interruption rate of the user equipment during a handover process of the cross-base station. In some embodiments, the process of communication uses existing processes and messages, without adding new processes or messages, the communication cost is saved.

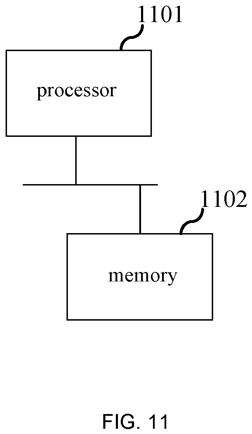

A seventh embodiment of the present application relates to a network device, as shown in FIG. 11, including:
at least one processor 1101; and
a memory 1102 communicated with the at least one processor 1101;
the memory 1102 stores instructions executable by the at least one processor, the instructions are executed by the at least one processor 1101 to enable the at least one processor 1101 to perform the resource management method provided by the above embodiment of the present application.

The memory and the processor are connected by means of a bus, the bus may include any number of interconnected buses and bridges, and the bus connects together various circuits of one or more processors and the memory. The bus may also connect together various other circuits such as peripherals, voltage regulators, and power management circuits, which are well known in the art and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by the processor is transmitted over the wireless medium via an antenna, and further, the antenna also receives the data and transmits it to the processor.

The processor is responsible for managing the bus and the usual processing, and may also provide various functions including timing, peripheral interfaces, voltage regulation, power management, and other control functions, and a memory may be used to store data used by the processor in performing operations.

The eighth embodiment of the present application relates to a computer readable storage medium, which stores a computer program. The above embodiments of the method are implemented when the computer program is executed by the processors. The computer readable storage medium includes a transient or non-transient, removable or non-removable medium implemented in any method or technique for storing information, such as computer readable instructions, data structures, computer program modules, or other data.

That is, it is understood by those skilled in the art that all or some of the steps in the method of the above embodiments can be accomplished by instructing the relevant hardware through a program stored in a storage medium, the program includes a number of instructions to cause a device (which may be a microcontroller, a chip, etc.) or a processor to perform all or some of the steps of the method described in the various embodiments of the present application. The aforementioned storage medium includes: USB flash drives, mobile hard drives, a read-only memory (ROM), a random access memory (RAM), disks or CD-ROMs, and various other media that can store program code.

It is understood by those skilled in the art that the above embodiments are for realizing the present application, and that various changes can be made to them in form and detail in practical applications without departing from the scope of the present application.

## Claims

1. A resource management method, **characterized by** comprising:
receiving a handover request, wherein the handover request carries first data resource bearer (DRB) information used by a user equipment on a source side during a handover process of cross-base stations;
performing resource admission according to the first data resource bearer information, obtaining second data resource bearer information admitted successfully and third data resource bearer information non-admitted;
sending the second data resource bearer information and the third data resource bearer information to a distributed unit;
receiving radio access resource bearer configuration information returned by the distributed unit according to the second data resource bearer information and the third data resource bearer information; and
sending the radio access resource bearer configuration information to the user equipment.

2. The method according to claim 1, wherein the performing resource admission according to the first data resource bearer information, obtaining the second data resource bearer information admitted successfully and the third data resource bearer information non-admitted comprises:
obtaining data resource bearer information admitted successfully from the first data resource bearer information as the second data resource bearer information, taking data resource bearer information other than the second data resource bearer information from the first data resource bearer information as the third data resource bearer information; or
allocating a new data resource bearer for the user equipment, taking new data resource bearer information as the second data resource bearer information and the first resource bearer information as the third data resource bearer information; or
obtaining data resource bearer information admitted successfully from the first data resource bearer information as first sub-data resource bearer information, allocating a new data resource bearer for the user equipment, taking new data resource bearer information as second sub-data resource bearer information, taking the first sub-data resource bearer information and the second sub-data resource bearer information as the second data resource bearer information, and taking data resource bearer information other than the first sub-data resource bearer information from the first data resource bearer information as the third data resource bearer information.

3. The method according to claim 1 or 2, wherein the first data resource bearer information comprises the second data resource bearer information and/or the third data resource bearer information, the sending the second data resource bearer information and the third data resource bearer information to the distributed unit comprises:
adding the second data resource bearer information to a DRB_to_Be_Setup_List field in a user equipment context setup request (UE CONTEXT SETUP REQUEST);
adding the first data resource bearer information to a Handover Preparation Information field in the user equipment context setup request; and
sending the user equipment context setup request to the distributed unit.

4. The method according to any one of claims 1 to 3, wherein the sending the second data resource bearer information and the third data resource bearer information to the distributed unit comprises:
adding the second data resource bearer information to the DRB_to_Be_Setup_List field in the user equipment context setup request;
adding a DRB_to_Be_Released_List field to the user equipment context setup request, and adding the third data resource bearer information to the DRB_to_Be_Released_List field; and
sending the user equipment context setup request to the distributed unit.

5. A resource management method, **characterized by** comprising:
receiving second data resource bearer information and third data resource bearer information sent by a centralized unit, wherein the second data resource bearer information is admitted successfully when performing resource admission according to the first data resource bearer information used by a user equipment on a source side during a handover process of cross-base stations, and the third data resource bearer information is not admitted when performing the resource admission according to the first data resource bearer information used by the user equipment on the source side during the handover process of cross-base stations;
releasing radio access resource bearer corresponding to the third data resource bearer information; and
sending radio access resource bearer configuration information to the centralized unit, wherein the radio access resource bearer configuration information is used to indicate a release of the radio access resource bearer corresponding to the third data resource bearer information.

6. The method according to claim 5, wherein the receiving the second data resource bearer information and the third data resource bearer information sent by the centralized unit comprises:
receiving a user equipment context setup request by the centralized unit;
obtaining the second data resource bearer information from a DRB_to_Be_Setup_List field in the user equipment context setup request (UE CONTEXT SETUP REQUEST);
obtaining the first data resource bearer information from a Handover Preparation Information field in the user equipment context setup request; and
obtaining the third data resource bearer information according to the first data resource bearer information and the second data resource bearer information.

7. The method according to claim 5, wherein the receiving the second data resource bearer information and the third data resource bearer information sent by the centralized unit comprises:
receiving a user equipment context setup request sent by the centralized unit;
obtaining the second data resource bearer information from a DRB_to_Be_Setup_List field in the user equipment context setup request; and
obtaining the third data resource bearer information from a DRB_to_Be_Released_List field in the user equipment context setup request.

8. The method according to claim 5, wherein after the receiving the second data resource bearer information and the third data resource bearer information sent by the centralized unit, and before the sending the radio access resource bearer configuration information to the centralized unit, the method further comprises:
allocating new radio access resource bearer according to the second data resource bearer information; and
wherein the radio access resource bearer configuration information is further used to indicate an addition of the new radio access resource bearer.

9. The method according to claim 5 or 8, wherein the sending the radio access resource bearer configuration information to the centralized unit comprises:
adding the radio access resource bearer information corresponding to the third data resource bearer information to a CellGroupConfig field in a user equipment context setup response, and sending the user equipment context setup response to the centralized unit; or
adding the radio access resource bearer information corresponding to the third data resource bearer information and new radio access resource bearer information corresponding to the second data resource bearer information to the CellGroupConfig field in the user equipment context setup response, and sending the user equipment context setup response to the centralized unit.

10. A network device, **characterized by** comprising:
at least one processor; and
a memory communicated with the at least one processor;
wherein the memory stores instructions executable by the at least one processor, the instructions are executed by the at least one processor to enable the at least one processor to perform the resource management method according to any one of claims 1 to 4, or the resource management method according to any one of claims 5 to 9.

11. A computer readable storage medium, **characterized in that** the storage medium stores programs, the programs are executable by a processor to implement the resource management method according to any one of claims 1 to 4, or the resource management method according to any one of claims 5 to 9.
